# FASCICULE DE BREVET EUROPEEN

(11) **EP 3 729 420 B1**
(45) Date de publication et mention de la délivrance du brevet: **09.02.2022**
(21) Numéro de dépôt: 18814578.3
(22) Date de dépôt: 04.12.2018
(51) Int. Cl.: G10L 15/22, G06F 3/16, H04N 21/422, H04N 21/439

(54) **DISPOSITIF ET PROCEDE D'ASSISTANCE VOCALE**
VORRICHTUNG UND VERFAHREN ZUR SPRACHUNTERSTÜTZUNG
DEVICE AND METHOD FOR VOICE ASSISTANCE

(30) Priorité: 19.12.2017 FR 1762493
(43) Date de publication de la demande: 28.10.2020
(73) Titulaire: SAGEMCOM BROADBAND SAS, 92500 Rueil-Malmaison (FR)
(72) Inventeur: BOURGOIN, Gilles, 92500 RUEIL MALMAISON (FR)
(74) Mandataire: Cabinet Camus Lebkiri
(86) Numéro de dépôt international: PCT/EP2018/083477
(87) Numéro de publication internationale: WO 2019/120984

(56) Documents cités:
- US-A1- 2015 294 666
- US-B1- 9 548 053
- US-B1- 9 728 188

## Description

### DOMAINE TECHNIQUE DE L'INVENTION

Le domaine technique de l'invention est celui de l'assistance vocale. La présente invention concerne un dispositif et un procédé d'assistance vocale.

### ARRIERE-PLAN TECHNOLOGIQUE DE L'INVENTION

Un dispositif d'assistance vocale, ou assistant vocal, fonctionne classiquement de la manière suivante : un microphone capte un environnement sous forme d'un signal et transmet ce signal à une unité de détection d'un mot de réveil (« wake word » en anglais). Le signal consécutif au mot de réveil est considéré comme une requête d'un utilisateur. En cas de détection du mot de réveil, l'unité de détection route le signal provenant du microphone vers une unité d'analyse qui le traite afin d'interpréter la requête qu'il contient et générer un signal de réponse à ladite requête. L'unité d'analyse transmet alors le signal de réponse à un haut-parleur qui le diffuse. L'utilisateur obtient ainsi une réponse à sa requête.

Un inconvénient des assistants vocaux connus est qu'ils ne font pas la différence entre un signal provenant directement d'un utilisateur humain et un signal provenant d'un enregistrement. Si le microphone capte par exemple un enregistrement en provenance d'un équipement de télévision ou de radio et qu'un journaliste prononce à l'antenne le mot de réveil, l'assistant vocal interprètera ce qui suit comme une requête et s'efforcera d'y répondre. Un tel dysfonctionnement est désagréable voire préjudiciable pour l'utilisateur : l'assistant vocal va par exemple répondre à une question que l'utilisateur n'a pas posée ou même passer intempestivement commande d'un objet.

Une technique connue d'annulation de l'écho acoustique permettrait de supprimer du signal capté par le microphone de l'assistant vocal le signal provenant d'un haut-parleur d'une source audio externe, telle qu'une télévision ou une radio. Cette technique requiert toutefois un module de traitement du signal complexe et nécessitant notamment, pour être efficace, de connaître avec précision la distance entre le microphone de l'assistant vocal et le haut-parleur de la source audio externe. Outre sa complexité et donc son coût, un inconvénient de cette solution est donc que le microphone de l'assistant vocal doit demeurer à une distance fixe de la source audio externe.

Une autre technique connue de mise en forme de faisceaux (« beam forming » en anglais) permettrait de localiser la source audio externe et d'identifier sa direction par rapport au microphone afin d'ignorer tout signal provenant de cette direction. Un inconvénient de cette technique est de se priver complètement d'une zone de l'espace pourtant utilisable : avec cette technique, un utilisateur se trouvant entre sa télévision et son assistant vocal sera ignoré par l'assistant vocal.

US 2015/294666 A1 divulgue un dispositif avec fonction de reconnaissance vocale capable de reconnaître la voix d'un utilisateur qui comprend : un haut-parleur pour transmettre un signal audio de façon externe ; un microphone pour acquérir la voix dans un espace ; une première unité de reconnaissance vocale pour reconnaître la voix acquise par le microphone ; une unité de contrôle de commande pour émettre une commande pour commander le dispositif avec fonction de reconnaissance vocale sur la base de la voix reconnue par la première unité de reconnaissance vocale ; et une unité de commande qui, en utilisant le signal audio émis par le haut-parleur, empêche l'unité de contrôle de commande d'émettre la commande.

### RESUME DE L'INVENTION

L'invention offre une solution aux problèmes évoqués précédemment, en proposant un assistant vocal permettant de différencier un signal provenant directement d'un utilisateur humain d'un signal provenant d'un enregistrement d'une source audio externe, sans contrainte sur la distance entre l'assistant vocal et la source de l'enregistrement ni sur le positionnement de l'utilisateur par rapport à l'assistant vocal et à la source de l'enregistrement.

Un premier aspect de l'invention concerne un dispositif d'assistance vocale comportant :
- un microphone et
- une unité de détection d'un mot de réveil,
le microphone étant configuré pour capter un environnement sonore sous forme d'un premier signal et transmettre le premier signal à l'unité de détection ; l'unité de détection étant configurée pour router, en cas de détection du mot de réveil dans le premier signal, ledit premier signal vers une unité d'analyse ; ladite unité d'analyse étant configurée pour traiter le premier signal et générer un signal de sortie ; l'unité de détection comportant :
- un premier module configuré pour recevoir du microphone le premier signal et détecter le mot de réveil dans ledit premier signal,
- un deuxième module configuré pour recevoir d'au moins une source audio externe un deuxième signal et détecter le mot de réveil dans ledit deuxième signal et
- un module de commande configuré pour router le premier signal vers l'unité d'analyse lorsque le mot de réveil est détecté uniquement par le premier module de l'unité de détection.

Un deuxième aspect de l'invention concerne un procédé d'assistance vocale comportant les étapes suivantes :
- un microphone capte un environnement sonore sous forme d'un premier signal et transmet le premier signal à une unité de détection comportant :
   ∘ un premier module de détection d'un mot de réveil dans le premier signal,
   ∘ un deuxième module de détection du mot de réveil dans un deuxième signal transmis par au moins une source audio externe, et
   ∘ un module de commande ;
- le module de commande route le premier signal vers une unité d'analyse lorsque le mot de réveil est détecté uniquement par le premier module de l'unité de détection ;
- l'unité d'analyse traite le premier signal transmis par le module de commande et génère un signal de sortie.

Grâce à l'invention, l'unité de détection détecte le mot de réveil à la fois dans le premier signal du microphone via le premier module et dans le deuxième signal d'au moins une source audio externe via le deuxième module. En cas de détection du mot de réveil, l'unité de détection route, via son module de commande, le premier signal vers l'unité d'analyse en fonction de l'activité des premier et deuxième modules de détection :
- si le mot de réveil a été détecté uniquement par le premier module, le module de commande route le premier signal vers l'unité d'analyse ;
- si le mot de réveil a été détecté uniquement par le deuxième module ou à la fois par les premier et deuxième modules, le module de commande ne route pas le premier signal vers l'unité d'analyse.

L'unité de détection différencie le premier signal du deuxième signal grâce à ses premier et deuxième modules de détection ; l'unité de détection adapte le routage du premier signal en fonction de l'activité des premier et deuxième modules grâce à son module de commande. Ainsi, le dispositif d'assistance vocale selon le premier aspect de l'invention et le procédé d'assistance vocale selon le deuxième aspect de l'invention traitent uniquement le premier signal sans aucune contrainte sur le positionnement du microphone vis-à-vis d'un utilisateur ou d'une source audio externe.

Outre les caractéristiques qui viennent d'être évoquées dans les paragraphes précédents, le dispositif d'assistance vocale selon le premier aspect de l'invention et le procédé d'assistance vocale selon le deuxième aspect de l'invention peuvent présenter une ou plusieurs caractéristiques complémentaires parmi les suivantes, considérées individuellement ou selon toutes les combinaisons techniquement possibles.

Le dispositif d'assistance vocale comporte une interface de sortie configurée pour être activée en fonction du signal de sortie généré par l'unité d'analyse, l'interface de sortie comportant de préférence un voyant lumineux et/ou un écran et/ou un haut-parleur. L'interface de sortie permet avantageusement d'informer un utilisateur du dispositif d'assistance vocale qui a émis une requête sur l'état du traitement de cette requête.

L'unité d'analyse interprète préférentiellement deux types de requêtes dans le premier signal :
- un premier type de requête qui est une question : dans ce cas, l'unité d'analyse génère un premier type de signal de sortie ;
- un deuxième type de requête qui est une commande d'un équipement externe : dans ce cas, l'unité d'analyse génère un deuxième type de signal de sortie.

L'interface de sortie du dispositif d'assistance vocale comporte avantageusement :
- un écran et/ou un haut-parleur configuré(s) pour être activé(s) par un signal de sortie du premier type ;
- un voyant lumineux configuré pour être activé par un signal de sortie du deuxième type.

Ainsi, l'interface de sortie permet avantageusement d'informer un utilisateur ayant émis une requête, de manière adaptée en fonction du type de la requête.

Selon un mode de réalisation préférentiel :
- le premier module active un premier évènement logique lorsqu'il détecte le mot de réveil dans le premier signal ;
- le deuxième module active un deuxième évènement logique lorsqu'il détecte le mot de réveil dans le deuxième signal ;
- le module de commande présente :
   ∘ un premier état logique dans lequel il ne route pas le premier signal vers l'unité d'analyse et
   ∘ un deuxième état logique dans lequel il route le premier signal vers l'unité d'analyse ;
- le module de commande est par défaut dans son premier état logique et
- le module de commande bascule dans son deuxième état logique lorsque le premier évènement logique est activé sans que le deuxième évènement logique soit activé.

Ce mode de réalisation préférentiel permet avantageusement de ne router le premier signal vers l'unité d'analyse que lorsqu'une condition positive est réalisée, à savoir : le premier évènement logique est activé et le deuxième évènement logique n'est pas activé. On privilégie ainsi la robustesse du dispositif, en garantissant que le premier signal ne sera pas routé vers l'unité d'analyse par erreur.

Selon le mode de réalisation préférentiel, chaque deuxième évènement logique demeure avantageusement activé pendant un délai prédéfini préférentiellement compris entre 0,1 seconde et 1 seconde. Ainsi, on tient compte d'un délai pouvant avoir lieu entre une détection d'une occurrence du mot de réveil dans le deuxième signal par le deuxième module, et une détection de cette même occurrence du mot de réveil dans le premier signal par le premier module, à cause par exemple :
- d'un temps de transmission du deuxième signal au sein de la source audio externe avant diffusion effective par la source audio externe d'une onde acoustique à partir du deuxième signal ;
- d'un temps de propagation de l'onde acoustique entre la source audio externe et le microphone ;
- d'un temps de traitement de l'onde acoustique par le microphone puis du premier signal par le premier module de détection.

Dans le cas où une occurrence du mot de réveil provient d'une source audio externe avant d'être captée par le microphone, on permet que l'activation du deuxième évènement logique pour cette occurrence du mot de réveil dure jusqu'à l'activation du premier évènement logique pour cette même occurrence du mot de réveil.

Selon le mode de réalisation préférentiel, le module de commande ayant basculé dans son deuxième état logique rebascule dans son premier état logique :
- sur commande de l'unité d'analyse à l'issue du traitement du premier signal ou
- automatiquement après un délai prédéfini préférentiellement compris entre 0,5 seconde et 5 secondes, plus préférentiellement compris entre 0,5 seconde et 3 secondes.

Un troisième aspect de l'invention concerne un décodeur de télévision numérique comportant un dispositif d'assistance vocale selon le premier aspect de l'invention.

Un quatrième aspect de l'invention concerne un produit programme d'ordinateur comprenant les instructions qui, lorsque le programme est exécuté par un ordinateur, conduisent celui-ci à mettre en œuvre les étapes du procédé d'assistance vocale selon le deuxième aspect de l'invention.

Un cinquième aspect de l'invention concerne un support d'enregistrement lisible par un ordinateur, sur lequel est enregistré le produit programme d'ordinateur selon le quatrième aspect de l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un dispositif d'assistance vocale selon le premier aspect de l'invention.
- La figure 2 montre un diagramme schématique des étapes d'un procédé d'assistance vocale selon le deuxième aspect de l'invention.

### DESCRIPTION DETAILLEE D'AU MOINS UN MODE DE REALISATION DE L'INVENTION

Sauf précision contraire, un même élément apparaissant sur des figures différentes présente une référence unique.

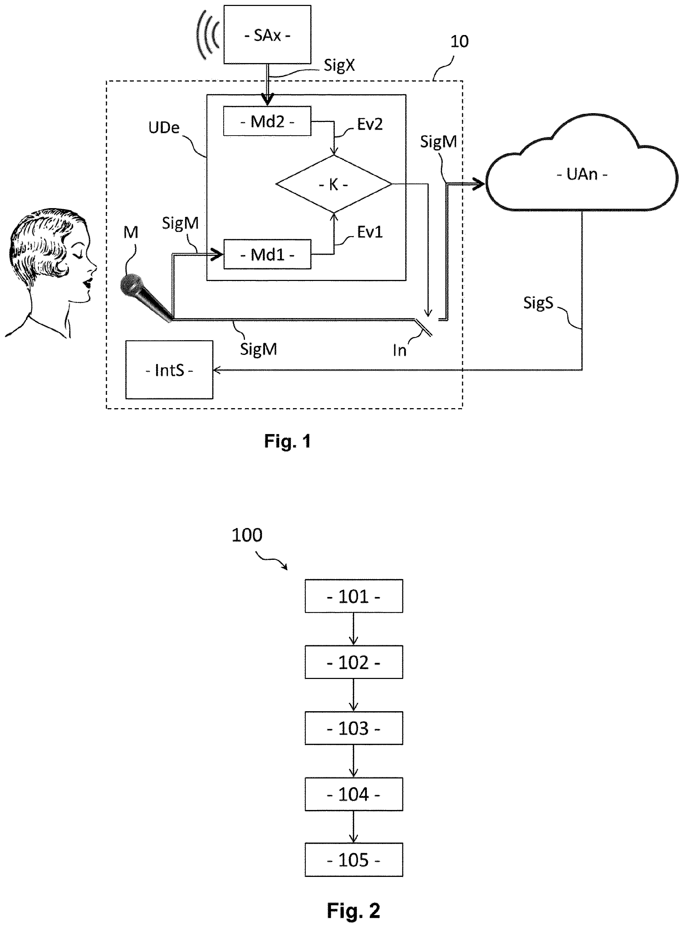

La figure 1 représente schématiquement un dispositif d'assistance vocale 100 selon le premier aspect de l'invention. Le dispositif d'assistance vocale 100 comporte :
- un microphone M et
- une unité de détection UDe d'un mot de réveil.

Préférentiellement, le dispositif d'assistance vocale 100 comporte également une interface de sortie IntS. L'interface de sortie IntS comporte préférentiellement :
- un voyant lumineux et/ou
- un écran et/ou
- un haut-parleur.

Le microphone M est configuré pour capter un environnement sonore sous forme d'un premier signal SigM. Le microphone M peut être analogique, auquel cas il produit un premier signal SigM analogique, ou numérique, auquel cas il produit un premier signal SigM numérique. Si le microphone M est analogique, le dispositif d'assistance vocale 100 comporte préférentiellement en outre un convertisseur analogique-numérique agencé entre le microphone M analogique et l'unité de détection UDe de manière à convertir le premier signal SigM analogique en un premier signal SigM numérique.

L'unité de détection UDe comporte :
- un premier module Md1,
- un deuxième module Md2 et
- un module de commande K.

Le premier module Md1 est configuré pour recevoir du microphone M le premier signal SigM, préférentiellement numérique, et détecter un mot de réveil (ou « wake word » en anglais) dans ledit premier signal SigM. Selon un mode de réalisation préférentiel, le premier module Md1 active un premier évènement logique Ev1 lorsqu'il détecte le mot de réveil.

Le deuxième module Md2 est configuré pour recevoir d'au moins une source audio externe SAx un deuxième signal SigX, préférentiellement numérique, et détecter le mot de réveil dans ledit deuxième signal SigX. Selon le mode de réalisation préférentiel, le deuxième module Md2 active un deuxième évènement logique Ev2 lorsqu'il détecte le mot de réveil. La figure 1 représente une seule source audio externe SAx mais le deuxième module Md2 peut avantageusement recevoir une pluralité de deuxièmes signaux SigX d'une pluralité de sources audio externes SAx. Des exemples de sources audio externes SAx sont : une télévision, une radio, un téléphone, un ordinateur personnel. Chaque source audio externe SAx est préférentiellement un équipement numérique ; dans le cas contraire, le dispositif d'assistance vocale 100 comporte préférentiellement en outre un convertisseur analogique-numérique agencé entre la ou les équipement(s) analogique(s) et l'unité de détection UDe de manière à convertir chaque deuxième signal SigX analogique en un deuxième signal SigX numérique.

Le module de commande K est configuré pour router le premier signal SigM vers une unité d'analyse UAn lorsque le mot de réveil est détecté uniquement par le premier module Md1. Selon le mode de réalisation préférentiel, le module de commande K présente :
- un premier état logique dans lequel il ne route pas le premier signal SigM vers l'unité d'analyse UAn et
- un deuxième état logique dans lequel il route le premier signal SigM vers l'unité d'analyse UAn.

Toujours selon le mode de réalisation préférentiel, le module de commande K est par défaut dans son premier état logique et bascule dans son deuxième état logique lorsque le premier évènement logique Ev1 est activé sans que le deuxième évènement logique Ev2 soit activé. En particulier, la figure 1 montre schématiquement la fonction de routage commandée par le module de commande K au moyen d'un interrupteur In :
- lorsque le module de commande K est dans son premier état logique, il maintient l'interrupteur In ouvert afin de ne pas router le premier signal SigM vers l'unité d'analyse UAn ;
- lorsque le module de commande K est dans son deuxième état logique, il ferme l'interrupteur In afin de router le premier signal SigM vers l'unité d'analyse UAn.

Le premier signal SigM et le deuxième signal SigX sont des signaux audio représentés par des flèches doubles à la figure 1. Le premier évènement logique Ev1, le deuxième évènement logique Ev2 et le signal de commande en sortie du module de commande K sont des signaux logiques représentés par des flèches simples à la figure 1.

L'unité d'analyse UAn est généralement hébergée dans une infrastructure informatique, comportant par exemple un ou plusieurs serveurs, accessible à distance, également appelée « nuage informatique » ou « cloud » en anglais. L'unité d'analyse UAn n'est donc généralement pas physiquement localisée au même endroit que le dispositif d'assistance vocale 100. A réception du premier signal SigM, l'unité d'analyse UAn le traite afin de générer un signal de sortie SigS adapté. L'unité d'analyse UAn met typiquement en œuvre une technique de compréhension du langage naturel (« natural language understanding » ou « NLU » en anglais) afin de traiter chaque premier signal SigM qu'elle reçoit.

Un utilisateur peut typiquement émettre deux types de requêtes :
- un premier type de requête qui est une question, une demande d'information ;
- un deuxième type de requête qui est une commande d'un équipement externe.

Le signal de sortie SigS généré par l'unité d'analyse UAn est avantageusement adapté au type de requête interprété par l'unité d'analyse UAn et l'interface de sortie IntS est à son tour avantageusement adaptée au signal de sortie SigS.

L'équipement externe est par exemple un équipement domotique comme un thermostat, un éclairage, un volet roulant : la commande est alors par exemple un réglage de température ou de luminosité (allumer ou éteindre une lampe, ouvrir ou fermer un volet roulant). L'équipement externe peut aussi être un téléphone intelligent (« smartphone » en anglais) afin de commander de passer un appel téléphonique, envoyer un message ou ajouter un évènement dans un agenda personnel... D'une manière générale, tout équipement apte à être connecté avec son environnement, c'est-à-dire à communiquer avec son environnement, peut être commandé par le signal de sortie SigS de l'unité d'analyse UAn

Si l'unité d'analyse UAn interprète le premier signal SigM reçu comme étant une requête du premier type, l'unité d'analyse UAn génère de préférence un premier type de signal de sortie SigS qui affiche l'information requise sur l'écran de l'interface de sortie IntS et/ou diffuse l'information requise via le haut-parleur de l'interface de sortie IntS. Si l'unité d'analyse UAn interprète le premier signal reçu comme étant une requête du deuxième type, l'unité d'analyse UAn génère de préférence un deuxième type de signal de sortie SigS qui commande l'équipement externe souhaité et active le voyant lumineux de l'interface de sortie IntS.

L'unité de détection UDe peut notamment être intégrée au sein d'un décodeur de télévision numérique. Le microphone M peut être intégré avec l'unité de détection UDe, donc le cas échéant au sein d'un décodeur de télévision numérique. Alternativement le microphone M et l'unité de détection UDe peuvent former deux parties physiquement distinctes pouvant être déplacées l'une par rapport à l'autre. L'interface de sortie IntS est préférentiellement intégrée avec le microphone M, au sein d'un même bloc physique.

La figure 2 montre un diagramme schématique des étapes d'un procédé d'assistance vocale 100 selon le deuxième aspect de l'invention :
- selon une première étape 101, le microphone M capte un environnement sonore sous forme du premier signal SigM ;
- selon une deuxième étape 102, le microphone M transmet le premier signa SigM à l'unité de détection UDe ;
- selon une troisième étape 103, le module de commande K de l'unité de détection UDe route le premier signal SigM vers l'unité d'analyse UAn lorsque le mot de réveil est détecté uniquement par le premier module Md1 de l'unité de détection UDe ;
- selon une quatrième étape 104, l'unité d'analyse UAn traite le premier signal SigM transmis par le module de commande K et génère un signal de sortie SigS.

## Revendications

1. Dispositif d'assistance vocale (10) comportant :
- un microphone (M) et
- une unité de détection (UDe) d'un mot de réveil,
le microphone (M) étant configuré pour capter un environnement sonore sous forme d'un premier signal (SigM) et transmettre le premier signal (SigM) à l'unité de détection (UDe) ; l'unité de détection (UDe) étant configurée pour router, en cas de détection du mot de réveil dans le premier signal (SigM), ledit premier signal (SigM) vers une unité d'analyse (UAn) ; ladite unité d'analyse (UAn) étant configurée pour traiter le premier signal (SigM) et générer un signal de sortie (SigS) ;
le dispositif d'assistance vocale (10) étant **caractérisé en ce que** l'unité de détection (UDe) comporte :
- un premier module (Md1) configuré pour recevoir du microphone (M) le premier signal (SigM) et détecter le mot de réveil dans ledit premier signal (SigM),
- un deuxième module (Md2) configuré pour recevoir d'au moins une source audio externe (SAx) un deuxième signal (SigX) et détecter le mot de réveil dans ledit deuxième signal (SigX) et
- un module de commande (K) configuré pour router le premier signal (SigM) vers l'unité d'analyse (UAn) lorsque le mot de réveil est détecté uniquement par le premier module (Md1) de l'unité de détection (UDe).

2. Dispositif d'assistance vocale (10) selon la revendication précédente **caractérisé en ce que** :
- le premier module (Md1) active un premier évènement logique (Ev1) lorsqu'il détecte le mot de réveil dans le premier signal (SigM) ;
- le deuxième module (Md2) active un deuxième évènement logique (Ev2) lorsqu'il détecte le mot de réveil dans le deuxième signal (SigX) ;
- le module de commande (K) présente :
∘ un premier état logique dans lequel il ne route pas le premier signal (SigM) vers l'unité d'analyse (UAn) et
∘ un deuxième état logique dans lequel il route le premier signal (SigM) vers l'unité d'analyse (UAn),
le module de commande (K) étant par défaut dans son premier état logique ;
- le module de commande (K) bascule dans son deuxième état logique lorsque le premier évènement logique (Ev1) est activé sans que le deuxième évènement logique (Ev2) soit activé.

3. Dispositif d'assistance vocale (10) selon la revendication précédente **caractérisé en ce que** chaque deuxième évènement logique (Ev2) demeure activé pendant un délai prédéfini préférentiellement compris entre 0,1 seconde et 1 seconde.

4. Dispositif d'assistance vocale (10) selon l'une quelconque des revendications 2 ou 3 **caractérisé en ce que** le module de commande (K) ayant basculé dans son deuxième état logique rebascule dans son premier état logique :
- sur commande de l'unité d'analyse (UAn) à l'issue du traitement du premier signal (SigM) ou
- automatiquement après un délai prédéfini préférentiellement compris entre 0,5 seconde et 5 secondes.

5. Dispositif d'assistance vocale (10) selon l'une quelconque des revendications précédentes **caractérisé en ce qu'**il comporte une interface de sortie (IntS) configurée pour être activée en fonction du signal de sortie (SigS) généré par l'unité d'analyse (UAn), l'interface de sortie (IntS) comportant de préférence un voyant lumineux et/ou un écran et/ou un haut-parleur.

6. Décodeur de télévision numérique comportant un dispositif d'assistance vocale (10) selon l'une quelconque des revendications 1 à 5.

7. Procédé d'assistance vocale (100) comportant les étapes suivantes :
- un microphone (M) capte (101) un environnement sonore sous forme d'un premier signal (SigM) et transmet (102) le premier signal (SigM) à une unité de détection (UDe) comportant :
∘ un premier module (Md1) de détection d'un mot de réveil dans le premier signal (SigM),
∘ un deuxième module (Md2) de détection du mot de réveil dans un deuxième signal (SigX) transmis par au moins une source audio externe (SAx), et
∘ un module de commande (K) ;
- le module de commande (K) route (103) le premier signal (SigM) vers une unité d'analyse (UAn) lorsque le mot de réveil est détecté uniquement par le premier module (Md1) de l'unité de détection (UDe) ;
- l'unité d'analyse (UAn) traite (104) le premier signal (SigM) transmis par le module de commande (K) et génère (105) un signal de sortie (SigS).

8. Produit programme d'ordinateur comprenant les instructions qui, lorsque le programme est exécuté par un ordinateur, conduisent celui-ci à mettre en œuvre les étapes du procédé d'assistance vocale (100) selon la revendication précédente.

9. Support d'enregistrement lisible par un ordinateur, sur lequel est enregistré le produit programme d'ordinateur selon la revendication précédente.

## Patentansprüche

1. Sprachunterstützungsvorrichtung (10), umfassend:
- ein Mikrofon (M) und,
- eine Detektionseinheit (UDe) eines Weckwortes,
wobei das Mikrofon (M) ausgestaltet ist, um eine Tonumgebung in Form eines ersten Signals (SigM) zu erfassen und das erste Signal (SigM) auf die Detektionseinheit (UDe) zu übertragen; wobei die Detektionseinheit (UDe) ausgestaltet ist, um im Detektionsfall des Weckwortes im ersten Signal (SigM) das genannte erste Signal (SigM) zu einer Analyseeinheit (UAn) zu routen; wobei die genannte Analyseeinheit (UAn) ausgestaltet ist, um das erste Signal (SigM) zu verarbeiten und ein Ausgangssignal (SigS) zu erzeugen;
wobei die Sprachunterstützungsvorrichtung (10) **dadurch gekennzeichnet ist, dass** die Detektionseinheit (Ude) umfasst:
- ein erstes Modul (Md1), das ausgestaltet ist, um von dem Mikrofon (M) das erste Signal (SigM) zu empfangen und das Weckwort in dem ersten Signal (SigM) zu erfassen,
- ein zweites Modul (Md2), das ausgestaltet ist, um von wenigstens einer externen Audioquelle (Sax) ein zweites Signal (SigX) zu empfangen und das Weckwort in dem genannten zweiten Signal (SigX) zu erfassen und
- ein Befehlsmodul (K), das ausgestaltet ist, um das erste Signal (SigM) zur Analyseeinheit (UAn) zu routen, wenn das Weckwort nur von dem ersten Modul (Md1) der Detektionseinheit (UDe) erfasst ist.

2. Sprachunterstützungsvorrichtung (10) gemäß dem voranstehenden Anspruch, **dadurch gekennzeichnet, dass**:
- das erste Modul (Md1) ein erstes logisches Ereignis (Ev1) aktiviert, wenn es das Weckwort im ersten Signal (SigM) erfasst;
- das zweite Modul (Md2) ein zweites logisches Ereignis (Ev2) aktiviert, wenn es das Weckwort im zweiten Signal (SigX) erfasst;
- das Befehlsmodul (K) aufweist:
∘ einen ersten logischen Zustand, in dem es nicht das erste Signal (SigM) zu einer Analyseeinheit (UAn) routet und
∘ einen zweiten logischen Zustand, in dem es das erste Signal (SigM) zur Analyseeinheit (UAn) routet,
wobei das Befehlsmodul (K) werksseitig in seinem ersten logischen Zustand ist;
- das Befehlsmodul (K) in seinen zweiten logischen Zustand schaltet, wenn das erste logische Ereignis (Ev1) aktiviert ist, ohne dass das zweite logische Ereignis (Ev2) aktiviert ist.

3. Sprachunterstützungsvorrichtung (10) gemäß dem voranstehenden Anspruch, **dadurch gekennzeichnet, dass** jedes zweite logische Ereignis (Ev2) während einer vorbestimmten Frist aktiviert bleibt, die bevorzugt zwischen 0,1 Sekunden und 1 Sekunde inbegriffen ist.

4. Sprachunterstützungsvorrichtung (10) gemäß irgendeinem der Ansprüche 2 oder 3, **dadurch gekennzeichnet, dass** das Befehlsmodul (K), das in seinen zweiten logischen Zustand geschaltet wurde, wieder zurück in seinen ersten logischen Zustand schaltet:
- auf den Befehl der Analyseeinheit (UAn) nach Abschluss der Verarbeitung des ersten Signals (SigM) oder
- automatisch nach einer vorbestimmten Frist, die bevorzugt zwischen 0,5 Sekunden und 5 Sekunden beträgt.

5. Sprachunterstützungsvorrichtung (10) gemäß irgendeinem der voranstehenden Ansprüche, **dadurch gekennzeichnet, dass** sie eine Ausgangsschnittstelle (IntS) umfasst, die ausgestaltet ist, um in Abhängigkeit von dem Ausgangssignal (SigS) aktiviert zu sein, das von der Analyseeinheit (UAn) erzeugt ist, wobei die Ausgangsschnittstelle (IntS) bevorzugt eine Leuchtanzeige und/oder einen Bildschirm und/oder einen Lautsprecher umfasst.

6. Digitaler Fernseh-Decodierer, umfassend eine Sprachunterstützungsvorrichtung (10) gemäß irgendeinem der Ansprüche 1 bis 5.

7. Sprachunterstützungsverfahren (100), umfassend die folgenden Schritte:
- ein Mikrofon (M) erfasst (101) eine Tonumgebung in Form eines ersten Signals (SigM) und überträgt (102) das erste Signal (SigM) auf eine Detektionseinheit (UDe), umfassend:
o ein erstes Detektionsmodul (Md1) eines Weckwortes im ersten Signal (SigM),
∘ ein zweites Detektionsmodul (Md2) des Weckwortes in einem zweiten Signal (SigX), das von wenigstens einer externen Audioquelle (SAx) übertragen wurde und
∘ ein Befehlsmodul (K);
- das Befehlsmodul (K) routet (103) das erste Signal (SigM) zu einer Analyseeinheit (UAn), wenn das Weckwort nur von dem ersten Modul (Md1) der Detektionseinheit (UDe) erfasst wird;
- die Analyseeinheit (UAn) verarbeitet (104) das erste Signal (SigM), das vom Befehlsmodul (K) übertragen wird und erzeugt (105) ein Ausgangssignal (SigS).

8. Computerprogrammprodukt, umfassend die Anweisungen, die den Computer dazu veranlassen, die Schritte des Sprachunterstützungsverfahrens (100) gemäß dem voranstehenden Anspruch umzusetzen, wenn das Programm vom Computer ausgeführt ist.

9. Von einem Computer lesbarer Aufzeichnungsträger, auf dem das Computerprogrammprodukt gemäß dem voranstehenden Anspruch gespeichert ist.

## Claims

1. A voice-assisted device (10) including:
- a microphone (M) and
- a unit (UDe) for detecting a wake-up word,
the microphone (M) being configured to sense a sound environment as a first signal (SigM) and transmit the first signal (SigM) to the detection unit (Ude); the detection unit (UDe) being configured to route, in case a wake-up word is detected in the first signal (SigM), said first signal (SigM) to an analysis unit (UAn); said analysis unit (UAn) being configured to process the first signal (SigM) and generate an output signal (SigS);
the voice-assisted device (10) being **characterised in that** the detection unit (UDe) includes:
- a first module (Md1) configured to receive the first signal (SigM) from the microphone (M) and detect the wake-up word in said first signal (SigM),
- a second module (Md2) configured to receive a second signal (SigX) from at least one external audio source (SAx) and detect the wake-up word in said second signal (SigX) and
- a command module (K) configured to route the first signal (SigM) to the analysis unit (UAn) when the wake-up word is only detected by the first module (Md1) of the detection unit (Ude).

2. The voice-assisted device (10) according to the preceding claim, **characterised in that**:
- the first module (Md1) activates a first logic event (Ev1) when it detects the wake-up word in the first signal (SigM);
- the second module (Md2) activates a second logic event (Ev2) when it detects the wake-up word in the second signal (SigX);
- the command module (K) has:
∘ a first logic state in which it does not route the first signal (SigM) to the analysis unit (UAn) and
∘ a second logic state in which it routes the first signal (SigM) to the analysis unit (UAn),
the command module (K) being by default in its first logic state;
- the command module (K) switches to its second logic state when the first logic event (Ev1) is activated without the second logic event (Ev2) being activated.

3. The voice-assisted device (10) according to the preceding claim, **characterised in that** each second logic event (Ev2) remains activated for a predefined period of time preferentially between 0.1 second and 1 second.

4. The voice-assisted device (10) according to any of claims 2 or 3, **characterised in that** the command module (K) having switched to its second logic state switches again to its first logic state:
- upon a command of the analysis unit (UAn) at the end of processing the first signal (SigM) or
- automatically after a predefined period of time preferentially between 0.5 second and 5 seconds.

5. The voice-assisted device (10) according to any of the preceding claims, **characterised in that** it includes an output interface (IntS) configured to be activated depending on the output signal (SigS) generated by the analysis unit (UAn), the output interface (IntS) preferably including an indicator lamp and/or a screen and/or a speaker.

6. A digital set top box including a voice-assisted device (10) according to any of claims 1 to 5.

7. A voice-assisted method (100) including the following steps:
- a microphone (M) senses (101) a sound environment as a first signal (SigM) and transmits (102) the first signal (SigM) to a detection unit (Ude) including:
∘ a first module (Md1) for detecting the wake-up word in the first signal (SigM),
∘ a second module (Md2) for detecting a wake-up word in a second signal (SigX) transmitted by at least one external audio source (SAx), and
∘ a command module (K);
- the command module (K) routes (103) the first signal (SigM) to an analysis unit (UAn) when the wake-up word is only detected by the first module (Md1) of the detection unit (UDe);
- the analysis unit (UAn) processes (104) the first signal (SigM) transmitted by the command module (K) and generates (105) an output signal (SigS).

8. A computer program product comprising instructions which, when the program is run by a computer, cause the latter to implement the steps of the voice-assisted method (100) according to the preceding claim.

9. A computer readable recording medium, on which the computer program product according to the preceding claim is recorded.
